# EUROPEAN PATENT SPECIFICATION

(11) **EP 1 009 552 B1**
(45) Date of publication and mention of the grant of the patent: **23.10.2002**
(21) Application number: 98934052.6
(22) Date of filing: 07.07.1998
(51) Int. Cl.: B09B 3/00, C22B 43/00

(54) **METHOD AND ARRANGEMENT FOR DESTRUCTION OF HAZARDOUS WASTE**
VERFAHREN UND EINRICHTUNG FÜR DIE VERNICHTUNG GEFÄHRLICHER ABFÄLLE
PROCEDE ET DISPOSITIF SERVANT A DETRUIRE DES DECHETS DANGEREUX

(30) Priority: 07.07.1997 SE 9702625
(43) Date of publication of application: 21.06.2000
(73) Proprietor: Bjästa Atervinning AB, 890 10 Bjästa (SE)
(72) Inventor: JONSSON, Tony, S-890 10 Bjästa (SE)
(74) Representative: Onn, Thorsten
(86) International application number: SE9801338
(87) International publication number: WO99004913

(56) References cited:
- EP-A- 0 420 367
- SE-B- 463 653
- US-A- 5 567 223
- NY TEKNIK: TEKNISK TIDSKRIFT, STOCKHOLM, ISSN 0550-8754, 1994:14, KERSTIN OESTERBERG, "Kvicksilvret i Roeren Bakas Till Briketten", page 5.
- WPI/DERWENT'S ABSTRACT, Accession Number 94-108118, week 9413; & SU,A,1 792 443 (UNIV TECH LENGD) 30 January 1993.

## Description

This invention relates to a method of destruction of hazardous waste in solid form, for instance strip lights, mercury lamps and other types of light sources containing mercury, which substance is dangerous for the environment.

Some methods to destruct strip lights and similar hazardous waste are previously known on the market, but these methods have only resulted in that a less part of the used strip lights have been able to be destructed in a suitable way.

According to a known method (Swedish "Teknisk tidskrift", 1994:14) the strip lights are melted down in an oven under high temperature. In this connection selenium is added directly to the oven together with the strip lights.

There are several disadvantages connected with this known technique. Firstly, the working environment is very bad, since the shutters of the oven have to be opened manually and the strip lights have to be thrown into the oven manually. Furthermore, it is necessary to pull out the melted glass with a rake.

Secondly, the addition of selenium directly into the oven means that the melted glass will contain mercury selenide, which accordingly is in a vitrified form. This means that the rest product "glass" cannot be taken care of but has to be left to a dumping place.

Thirdly, an apparatus made in accordance to the known method gets a low capacity.

Reference is also made to US-Patent No. 5, 567, 223, wherein the mercury-containing waste is heated in the presence of elementary selenium vapour in such a way that mercury and selenium will be present in a gaseous state.

The drawback in this method is that the waste is contaminated with selenium.

This invention intends to eliminate the problems with known technique and provide a new method and a new arrangement for destruction of hazardous waste, which arrangement, due to its construction, gets a very big capacity and makes possible a very effective destruction of the hazardous waste, which usually comprises strip lights and mercury lamps.

The new invention gives many advantages compared with known technique:

Firstly, the poisonous mercury is neutralised in a secure way by means of selenium, which is added to a reaction chamber outside the oven, whereas glass is re-cycled which is completely free from mercury selenide. Furthermore, the new invention makes also possible a re-cycling of metals from the destructed light sources.

Secondly, the invention is arranged in that way that the glass spontaneously leave the oven in melted form, which melted glass easily can be taken care of, whereas the mercury selenide are caught for crystallisation by means of a cooling device.

Thirdly, the destruction process according to the invention is automated and completely closed, wherefore the working environment becomes extremely good.

The characterizing steps and features of the method and arrangement appear in more detail by the following claims.

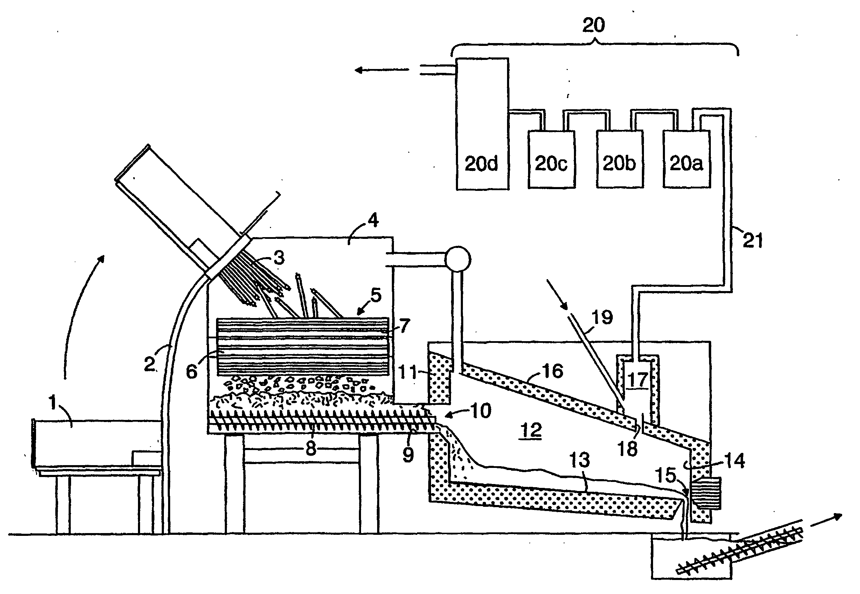

A preferred embodiment of the invention shall be described in more detail with reference to the accompanying drawing, which shows the different steps of the destruction process.

The step 1 of the process comprises feeding hazardous waste into an apparatus for dividing material into pieces, the hazardous waste being assumed to consist of used strip lights. In this case the strip lights are collected to special tubes 1, which are known by the applicant's own international patent application PCT/SE96/00285.

As appears from the drawing the tube 1 is intended to be placed in a first, essentially horizontal position in a frame 2, which together with the tube 1 constitutes an infeeding device for the strip lights.

The tube 1 is intended in a mechanical way to move upwards in the frame 2 and to take an inclined position of about 45° angular distance from the former one, in which the strip lights 3 by their own weight via an air lock 4 fall down into an apparatus 5 for dividing the material into pieces, which apparatus comprises two longitudinal and circularcylinder-like means 6, which are contra-rotating, and which at their peripheries are provided with projections 7 for effective division into pieces.

This division into pieces comprises step 2 of the destruction process and results in a pulverization of the material.

In the bottom of the apparatus 5 for dividing the strip lights into pieces is arranged a longitudinal, circularcylinder-like feeding out screw 8, which is intended to feed out the light strips, crashed into pieces, via a duct 9 at the bottom portion of the apparatus 5 for dividing the strip lights into pieces, which duct 9 has a connection with an opening 10 of the backwall 11 of an oven 12, where there prevails a temperature of 1350-1400°C, and where the melting down phase, step 3, takes place.

When crashing the strip lights/mercury lamps into pieces in the apparatus 5 for dividing the material into pieces an amount of mercury in gas form is set free. It is important that also this gas comes into the oven and for this reason an underpressure is applied in the oven which underpressure sucks the mercury gas, formed in the apparatus 5 for dividing the strip lights into pieces, out of this one and into the oven.

The high temperature of the oven 12 has the consequence that the gas of the strip lights melts to a mass laying itself on the bottom portion 13 of the oven, whereas the mercury and potentially other heavy metals are gased off from the glass mass.

The bottom portion 13 of the oven 12 inclines downwords about 10 degrees from the backwall 11 and forwards. At the front portion 14 of the oven there is at the bottom an opening 15 where the melted gas flows out, whereafter the glass is suitably cooled down and can be taken care of in solid form.

On the inclined roof 16 of the oven 12 is at its front part a chamber 17 connected, an opening 18 being arranged between the oven 12 and the chamber 17. This chamber is under vacuum, the heavy metals being in gas form in the oven 12 being sucked into the chamber 17. In this connection the opening 18 has such a size (-Ø 50 mm) that the gas flow from the oven to the chamber can amount to approximately 5m³/h.

To the chamber 17 is dosed a well-balanced amount of selenium via a tubular means 19, and this selenium is evaporated at about 680° and is mixed with the heavy metal gases to a chemical compound, which accordingly constitutes the step 4 of the process.

The reaction chamber 17 is in connection with a cooling device 20 via a duct 21, and this cooling device is also under vacuum, and therefore the mixed gas is sucked into the cooling device and is precipitated in the form a solid end product, namely mercury selenide which in principal is insoluble.

The cooling of the mixed gas, which can be denoted as step 5 of the process, can be made in several phases, and therefore the cooling device 20 comprises a plurality of units 20a-d.

The new apparatus system functions in the following way, while pointing out that all process steps can be mechanized and be carried out automatically:

The tube 1, patent applied for and filled with used strip lights, is placed in the frame 2, whereafter it is taken to the inlet position, where the strip lights fall down to the apparatus 5 for dividing the strip lights into pieces and is crashed there to pieces. The glass, crashed into pieces, and heavy metals in solid form are fed into an oven 20 by a feeding screw 8 and potential mercury gas, set free, is sucked into the oven 12 by the underpressure prevailing there.

Due to the high temperature in the oven, the glass melts to a mass which spontaneously flows out of the oven at its front end, whereas the heavy metals are gased off from the mass and are sucked into a reaction chamber, which is connected with the oven 12, since there prevail an underpressure in this chamber, which is lower than the pressure of the oven.

Into the reaction chamber selenium is added which due to the high temperature (∼ 680°) is evaporated and is mixed with the heavy metal gas to a chemical compound. From the chamber 17 the mixed gas is sucked to a cooling device and is precipitated there in the form of mercury selenide, while being assumed that the heavy metal mainly comprises mercury.

The new apparatus system is very effective and manages approximately 250 kg strip lights per hour.

The invention is not limited to the mentioned embodiment but can be modified within the scoop of the following claims.

## Claims

1. A method of neutralizing mercury, which is dangerous to the environment, **characterized by** the following steps:
- Mercury is vaporized and sucked into a chamber (17), which is set under vacuum;
- To the chamber (17), which has a suitable temperature, is dosed a well-balanced amount of selenium, which is vaporized and is mixed with the mercury gas;
- The mixed gas is sucked into a cooling device and is precipatated in the form of a non-dangerous mercury selenide in solid form.

2. A method according to claim 1, the mercury being found in for instance strip lights, mercury lamps and other types of light sources, **characterized by** the following steps:
- The method is designed in that way that the destruction process is automated;
- The strip lights/mercury lamps (3) are fed into an apparatus (5) for dividing the material into pieces, which apparatus crashes the strip lights/mercury lamps, whereafter the material, crushed into pieces, is fed out of the apparatus for dividing the material into pieces to an oven (12);
- In the oven (12), where the temperature is 1350 - 1400°C the glass is melted down to a mass, which spontaneously flows out of the same, whereas the mercury is gased off from the glass mass and is sucked into the chamber (17), which is connected with the oven (12).

3. An arrangement for destruction of hazardous waste in solid form, for instance strip lights, mercury lamps and other types of light sources containing the substance mercury, including neutralizing the mercury substance, **charactarized** by the combination of the following devices:
- The arrangement is made in that way that the destruction process is automated;
- An infeeding device (1, 2) is arranged for feeding in strip lights/mercury lamps (3) into an apparatus for dividing the material into pieces, where the strip lights/mercury lamps (3) are crushed into pieces;
- An oven (12), which is set under underpressure and which is connected with the apparatus (5) for dividing the material into pieces, and into which the crushed strip lights/mercury lamps (3) are intended to be fed, is heatable to the melting point of the glass and has such a design that the melted glass can spontaneously flow out of the same;
- A reaction chamber (17), which is set under underpressure and into which selenium is intended to be fed, is openly connected with the oven (12) so that mercury gas formed in the same can stream into the chamber (17) and be mixed with selenium evaporated in the same;
- A cooling device which is connected with the reaction chamber (17) so that the mixed gas formed in the same can stream into the cooling device and be cooled there for forming mercury selenide in solid form.

4. An arrangement according to claim 3, the infeeding device comprising a tube (1) for used strip lights/mercury lamps (3), **characterized in that** the tube (1) is intended to be placed in a first essentially horizontal position in a frame (2) and is further intended in a mechanical way to move upwards in the frame (2) and to take an inclined position at an angular distance from the first position, in which the strip lights/mercury lamps (3) by their own weight fall down, and that the apparatus (5) for dividing the material into pieces comprises two contra-rotating, longitudinal and circularcylinder-like means (6), which on their periferies are provided with projections (7) for effective dividing the material into pieces.

5. An arrangement according to claim 4, **characterized in that** the apparatus (5) for dividing the material into pieces further comprises a longitudinal feeding our screw (8), which is parallel with the contra-rotating means (6), for feeding out the crushed strip lights/mercury lamps to the mentioned oven (12).

6. An arrangement according to any one of the claims 3-5, **characterized in that** the reaction chamber (17) is positioned on the roof (16) of the oven (12).

7. An arrangement according to any one of the claims 3-6, **characterized in that** the cooling device (20) comprises a plurality of units (20a-d), whereby the cooling can be made in several phases.

## Patentansprüche

1. Verfahren zum Neutralisieren von Quecksilber, welches für die Umwelt schädlich ist, **gekennzeichnet durch** die folgenden Schritte:
- Quecksilber wird verdampft und in eine Kammer (17) gesaugt, in welcher ein Vakuum herrscht;
- in die Kammer (17), welche eine geeignete Temperatur hat, wird eine gut ausgeglichene Menge von Selen eingebracht, welches verdampft wird und mit dem Quecksilbergas gemischt wird;
- das gemischte Gas wird in eine Kühleinrichtung gesaugt und fällt in Form eines ungefährlichen Quecksilberselenids in fester Form aus.

2. Verfahren nach Anspruch 1, wobei das Quecksilber beispielsweise in Deckenleuchten, Quecksilberlampen und anderen Arten von Lichtquellen vorhanden ist, **gekennzeichnet durch** die folgenden Schritte:
- Das Verfahren ist so ausgestaltet, dass der Vernichtungsvorgang automatisiert ist;
- die Deckenleuchten/Quecksilberlampen (3) werden in eine Vorrichtung (5) zum Aufteilen des Materials in Stücke eingebracht, welche Vorrichtung die Deckenleuchten/Quecksilberlampen zerquetscht, wonach das Material, zerquetscht in Stücke, aus der Vorrichtung zum Aufteilen des Materials in Stücke heraus und in einen Ofen (12) geführt wird;
- in dem Ofen (12), wo die Temperatur 1350 - 1400°C beträgt, wird das Glas zu einer Masse zerschmolzen, welche spontan aus dem Ofen herausfließt, wohingegen das Quecksilber aus der Glasmasse verdampft wird und in die Kammer (17) gesaugt wird, welche mit dem Ofen (12) verbunden ist.

3. Anordnung zur Vernichtung von gefährlichem Abfall in fester Form, beispielsweise Deckenleuchten, Quecksilberlampen und anderen Arten von Lichtquellen, die die Substanz Quecksilber beinhalten, mit dem Neutralisieren der Quecksilbersubstanz, **gekennzeichnet durch** die Kombination der folgenden Einrichtungen:
- Die Anordnung ist so ausgestaltet, dass der Vernichtungsvorgang automatisiert ist;
- eine Zuführeinrichtung (1, 2) ist vorgesehen zum Zuführen von Deckenleuchten/Quecksilberlampen (3) in eine Vorrichtung zum Aufteilen des Materials in Stücke, wo die Deckenleuchten/Quecksilberlampen (3) in Stücke zerquetscht werden;
- ein Ofen (12), in welchem ein Unterdruck herrscht und welcher mit der Vorrichtung (5) zum Aufteilen des Materials in Stücke verbunden ist, und in welchen die zerquetschten Deckenleuchten/Quecksilberlampen (3) eingebracht werden sollen, ist auf den Schmelzpunkt des Glases heizbar und ist so ausgestaltet, dass das geschmolzene Glas spontan aus dem Ofen herausfließen kann;
- eine Reaktionskammer (17), in welcher ein Unterdruck herrscht und in welche Selen eingeführt werden soll, ist offen mit dem Ofen (12) verbunden, so dass Quecksilbergas, welches dort ausgebildet wird, in die Kammer (17) strömen und mit dem Selen gemischt werden kann, welches in der Kammer verdampft wird;
- eine Kühleinrichtung, welche mit der Reaktionskammer (17) verbunden ist, so dass das gemischte Gas, welches dort gebildet wird, in die Kühleinrichtung strömen und dort zum Ausbilden von Quecksilberselenid in fester Form abgekühlt werden kann.

4. Anordnung nach Anspruch 3, wobei die Zuführeinrichtung eine Röhre (1) für gebrauchte Deckenleuchten/Quecksilberlampen (3) aufweist, **dadurch gekennzeichnet, dass** die Röhre (1) in einer ersten im Wesentlichen horizontalen Lage in einem Rahmen (2) platzierbar ist und außerdem auf mechanische Art und Weise in dem Rahmen (2) nach oben bewegbar ist und eine geneigte Stellung in einem winkligen Abstand von der ersten Position einnehmen kann, in welcher die Deckenleuchten/Quecksilberlampen (3) durch ihr eigenes Gewicht herunterfallen, und dass die Vorrichtung (5) zum Aufteilen des Materials in Stücke zwei sich gegeneinander drehende, längliche und kreiszylinderartige Mittel (6) aufweist, welche an ihren Außenumfängen mit Vorsprüngen (7) zum effektiven Teilen des Materials in Stücke versehen sind.

5. Anordnung nach Anspruch 4, **dadurch gekennzeichnet, dass** die Vorrichtung (5) zum Aufteilen des Materials in Stücke weiter eine längliche Ausführschraube (8) aufweist, welche parallel zu den sich gegeneinander drehenden Mitteln (6) liegt, zum Ausführen der zerquetschten Deckenlampen/Quecksilberlampen in den genannten Ofen (12).

6. Anordnung nach einem der Ansprüche 3 bis 5, **dadurch gekennzeichnet, dass** die Reaktionskammer (17) an dem Dach (16) des Ofens (12) vorgesehen ist.

7. Anordnung nach einem der Ansprüche 3 bis 6, **dadurch gekennzeichnet, dass** die Kühleinrichtung (20) mehrere Einheiten (20a-d) aufweist, wodurch die Abkühlung in mehreren Schritten durchgeführt werden kann.

## Revendications

1. Méthode de neutralisation du mercure, dangereux pour l'environnement, **caractérisée par** les étapes suivantes :
- le mercure est vaporisé et aspiré dans une enceinte (17), en sous-pression ;
- une quantité bien équilibrée de sélénium est envoyée dans l'enceinte (17), dont la température est appropriée, et ce sélénium se vaporise et se mélange avec le mercure gazeux ;
- le mélange gazeux est aspiré dans un dispositif de refroidissement et précipite sous la forme d'un séléniure de mercure à l'état solide, non dangereux.

2. Méthode selon la revendication 1, le mercure se trouvant, par exemple, dans des tubes fluorescents, des lampes à mercure et d'autres types de sources lumineuses, **caractérisée par** les étapes suivantes :
- la méthode est conçue de telle façon que le procédé de destruction soit automatique ;
- les tubes fluorescents/lampes à mercure (3) sont introduits dans un appareil (5) pour la division de la matière en morceaux, cet appareil écrase les tubes fluorescents/lampes à mercure, puis la matière, écrasée en morceaux, est envoyée de l'appareil pour la division de la matière en morceaux dans un four (12) ;
- dans le four (12), où la température est de 1350 à 1400°C, le verre fond en une masse, qui sort spontanément du four, tandis que le mercure gazeux se dégage de la masse de verre et est aspiré dans l'enceinte (17), reliée au four (12).

3. Installation pour la destruction d'un déchet dangereux sous forme solide, par exemple des tubes fluorescents, des lampes à mercure et d'autres types de sources lumineuses contenant la substance mercure, incluant la neutralisation de la substance mercure, **caractérisée par** la combinaison des dispositifs suivants :
- l'installation est conçue de telle façon que le procédé de destruction soit automatique ;
- un dispositif d'introduction (1,2) permet d'introduire les tubes fluorescents/lampes à mercure (3) dans un appareil pour la division de la matière en morceaux, dans lequel les tubes fluorescents/lampes à mercure (3) sont écrasés en morceaux ;
- un four (12), en sous-pression, relié à l'appareil (5) pour la division de la matière en morceaux et destiné à recevoir les tubes fluorescents/lampes à mercure, peut être chauffé à la température de fusion du verre et est conçu de telle façon que le verre fondu puisse spontanément en sortir ;
- une enceinte de réaction (17), en sous-pression et prévue pour recevoir du sélénium, est reliée au four (12) par une ouverture de telle façon que le mercure gazeux formé dans celui-ci puisse entrer dans l'enceinte (17) et se mélanger au sélénium évaporé dans l'enceinte ;
- un dispositif de refroidissement relié à l'enceinte de réaction (17) de telle façon que le mélange de gaz formé dans l'enceinte puisse s'écouler dans le dispositif de refroidissement et être refroidi dans celui-ci avec formation de séléniure de mercure sous forme solide.

4. Installation selon la revendication 3, le dispositif d'admission comprenant un tube (1) pour les tubes fluorescents/lampes à mercure usés (3), **caractérisée en ce que** le tube (1) est prévu pour être placé dans une première position essentiellement horizontale dans un bâti (2) et est en outre prévu pour monter de façon mécanique dans le bâti (2) et pour prendre une position inclinée à une distance angulaire de la première position, position en laquelle les tubes fluorescents/lampes à mercure (3) tombent de leur propre poids, et **en ce que** l'appareil (5) pour la division de la matière en morceaux comprend deux moyens du type cylindres circulaires et longitudinaux tournant en sens inverse (6) munis sur leur périphérie de saillies (7) pour diviser efficacement la matière en morceaux.

5. Installation selon la revendication 4, **caractérisée en ce que** l'appareil (5) pour la division de la matière en morceaux comprend en outre une vis d'alimentation longitudinale (8) parallèle aux moyens tournant en sens inverse (6) pour l'introduction des tubes fluorescents/lampes à mercure écrasés dans le four mentionné (12).

6. Installation selon l'une quelconque des revendications 3 à 5, **caractérisée en ce que** l'enceinte à réaction (17) est positionnée sur le toit (16) du four (12).

7. Installation selon l'une quelconque des revendications 3 à 6, **caractérisée en ce que** le dispositif de refroidissement (20) comprend plusieurs unités (20a-d), le refroidissement pouvant ainsi être réalisé en plusieurs phases.
